# FASCICULE DE BREVET EUROPEEN

(11) **EP 3 210 285 B1**
(45) Date de publication et mention de la délivrance du brevet: **27.05.2020**
(21) Numéro de dépôt: 15784382.2
(22) Date de dépôt: 23.10.2015
(51) Int. Cl.: H02K 21/16, H02K 29/03, H02K 1/14, H02K 1/27

(54) **MOTEUR POLYPHASÉ PRÉSENTANT UNE ALTERNANCE D'AIMANTS PERMANENTS ET DE PÔLES SAILLANTS**
MEHRPHASENMOTOR MIT ABWECHSELNDER ANORDNUNG AUS DAUERMAGNETEN UND SCHENKELPOLEN
POLYPHASE MOTOR HAVING AN ALTERNATION OF PERMANENT MAGNETS AND SALIENT POLES

(30) Priorité: 23.10.2014 FR 1460195
(43) Date de publication de la demande: 30.08.2017
(73) Titulaire: MMT SA, 6304 Zug (CH)
(72) Inventeur: GANDEL, Pierre, F-25660 Montfaucon (FR); AUBERTIN, Mathieu, F-25320 Chemaudin (FR); TAVERNIER, Stéphane, F-25000 Besançon (FR); BIWERSI, Stéphane, F-25140 Frambouhans (FR)
(74) Mandataire: IP Trust
(86) Numéro de dépôt international: PCT/EP2015/074565
(87) Numéro de publication internationale: WO 2016/062844

(56) Documents cités:
- FR-A1- 2 899 396
- JP-A- 2008 160 939
- US-A1- 2010 133 939
- US-A1- 2010 148 612
- US-A1- 2010 301 695

## Description

### Domaine de l'invention

La présente invention concerne le domaine des moteurs polyphasés destinés notamment à des applications telles que la levée de soupape dans des moteurs à explosion, nécessitant des densités de couples élevés (quelques newton-mètre typiquement) et des vitesses de quelques milliers de tours par minutes typiquement.

### Etat de la technique

On connaît dans ce domaine des moteurs présentant des alternances d'aimants et de pôles saillants dont le rotor ne comporte qu'un aimant permanent par paires de pôle.

Par exemple, la demande de brevet US2010148612 décrit un moteur sans balais comportant des pôles magnétiques disposés pour présenter tous la même polarité. Le rotor comporte des fentes formant une résistance magnétique au niveau des extrémités circonférentielles de chacune des parties de pôles magnétiques de sorte qu'une partie de noyau de fer est formée entre les parties de pôle magnétique adjacentes. Le flux magnétique des parties de pôles magnétiques passe à travers la partie de noyau de fer le long de la direction radiale. Les fentes comprennent un premier espace situé à l'extrémité avant de la portion de pôle magnétique dans la direction de rotation du rotor et un second espace situé à l'extrémité arrière de la partie de pôle magnétique dans la direction de rotation du rotor. La largeur circonférentielle de la première fente est réglée pour être supérieure à la largeur circonférentielle de la deuxième fente.

Par exemple encore, la demande de brevet US 20100133939 décrit un autre exemple de moteur comprenant un stator et un rotor. Le rotor comprend une première unité et une seconde unité. Les premier et second aimants sont disposés de façon alternée le long d'une direction circonférentielle du rotor à des intervalles angulaires égaux pour former des parties de pôles magnétiques. Le nombre de parties de pôles magnétiques de la seconde unité est le même que le nombre de parties de pôles magnétiques de la première unité. Le troisième aimant et l'aimant de la première unité ayant le même pôle que le troisième aimant sont alignés dans la direction axiale du rotor.

On connaît également la demande de brevet US2010/0301695, qui décrit un moteur électrique. Il comprend un rotor présentant une alternance d'aimants et de pôles ferromagnétiques et un stator présentant des pôles évasés. Cette configuration est classique, qui est souvent utilisée pour limiter le couple résiduel (sans courant) et la composante de couple à réluctance variable (couple sans aimant).

Le brevet FR2899396 présente certes des dents droites au stator, mais ce dernier est toujours associé à un rotor portant des aimants/pôles lisses (sans saillance), car cette combinaison peut compenser un couple résiduel.

### Inconvénients de l'art antérieur

Dans l'état actuel de la technique il est enseigné la réalisation de pôles au stator présentant des formes évasées du côté intérieur, proche du rotor. Cette technique classique a notamment pour but de lisser les efforts sans courant et de minimiser la composante de réluctance variable introduite par la saillance au rotor.

Cependant, l'utilisation de pôles évasés au stator présente des inconvénients importants. Notamment, elle limite le volume de bobinage qu'il est possible d'installer, diminuant ainsi sensiblement le couple moteur qu'il est possible d'atteindre pour une puissance électrique donnée. De plus, elle rend le montage des bobines plus difficile puisque le bobinage doit être réalisé en place en prenant soin de bien suivre la place dédiée aux bobines. L'automatisation du processus est ainsi difficile.

Un des problèmes introduit par l'utilisation de pôles évasés est aussi la plus grande quantité de flux magnétique récolté globalement par les pôles, ce qui induit des saturations magnétiques et donc des pertes en fonctionnement plus importantes.

### Objet de l'invention

L'objet de l'invention est de proposer une structure de moteur permettant un rapport encombrement/puissance élevé et une fluidité de fonctionnement (smoothness), grâce à l'utilisation de pôles droits ou rectilignes (dont la section transversale, c'est-à-dire selon un plan perpendiculaire à l'axe de rotation, est rectangulaire ou trapézoïdale) au stator ce qui est contraire aux enseignements de l'état de la technique dans le cadre d'utilisation de pôles saillants au rotor et des nombres de pôles au stator faibles, comptant typiquement 12 ou 24 dents au stators. Les résultats obtenus dans le cadre de moteurs ayant 12 ou 24 pôles au stator et 5 ou, respectivement, 10 paires de pôles au rotor, montrent une amélioration inattendue par rapport aux moteurs de l'état de la technique.

Les avantages permis avec l'invention sont principalement :
- un couple de réluctance variable d'amplitude négligeable, réduisant ainsi l'impact de cette composante sur le couple total,
- un couple avec courant de forme sinusoïdal facilitant son pilotage et la fluidité de mouvement,
- un couple sans courant d'amplitude négligeable contribuant aussi à la fluidité de mouvement,
- une inductance de phase minimisée permettant d'utiliser un moteur suivant l'invention pour des applications dynamiques.

Une topologie de moteur selon l'invention permet ainsi de bénéficier de l'effet des pôles saillants (fermeture de l'entrefer et donc augmentation du flux magnétique pour une masse d'aimant diminuée) sans avoir d'effet négatif dû à la réluctance variable (couple négligeable et ne s'opposant pas au couple avec courant) en gardant un bon coefficient de remplissage de cuivre au stator et une facilité de réalisation. La constante moteur, appelée Km (en Newton-mètre par racine de Watt) et représentant le ratio du couple moteur sur la racine carrée de la puissance électrique dissipée par le bobinage (dites puissance « Joules »), est ainsi améliorée.

L'utilisation de pôles (dents) droits permet d'optimiser le bobinage, garantissant un facteur de remplissage amélioré (rapport du volume de cuivre réel sur volume occupé par la bobine) par rapport à celui qui peut être réalisé dans des stators à pôles évasés.

L'utilisation de pôles étroits, c'est-à-dire ayant une largeur angulaire, à leur extrémité intérieure, inférieure au demi-pas polaire, permet particulièrement d'améliorer encore le volume de cuivre et donc de diminuer la résistance électrique de bobine et augmenter la constante Km. En effet, avec des pôles droits, on peut réaliser l'opération de bobinage hors du moteur avec de meilleurs rendements que ceux obtenus en bobinant sur stator (comme dans le cas des moteurs à pôles évasés), rendement qui se trouvera optimisé lorsque tout ou partie des dents du stator ont une largeur angulaire réduite par rapport au demi pas polaire.

A titre d'exemple non limitatif, pour un moteur ayant un diamètre extérieur de l'ordre de 40mm et un diamètre extérieur de rotor de l'ordre de 25mm, en appliquant les enseignement de la présente invention, la constante moteur Km est améliorée de 30 à 40%, selon les coefficients de remplissage bobine réalisés, par rapport à un moteur de l'art antérieur.

Les topologies de l'art antérieur ne présentent pas de tels avantages particulièrement lorsqu'utilisées avec cinq paires de pôles.

Spécifiquement, l'invention se réfère à un moteur électrique polyphasé comprenant un stator portant au moins trois bobines et constitué de 12.K dents s'étendant radialement et un rotor présentant 5.K paires de pôles magnétiques, K étant égal à 1 ou 2, le rotor étant constitué par un noyau en un matériau ferromagnétique et présentant une alternance de 5K pôles aimantés (ayant une aimantation permanente), et de 5K pôles saillants non aimantés (pas d'aimantation permanente) caractérisé en ce que le stator présente des dents de section transversale rectangulaire ou trapézoïdale convergeant vers le centre du moteur.

Les modes de réalisation peuvent comprendre les cas où le stator est intérieur au rotor ou le cas où le stator est extérieur au rotor.

Dans l'ensemble du texte, un pôle aimanté est soit sous la forme d'un aimant en surface du rotor, soit sous la forme de un ou plusieurs aimants enterrés dans le rotor. Dans ce dernier cas, le flux magnétique des aimants s'ajoute dans la culasse du rotor au voisinage pour former un pôle aimanté.

Avantageusement, le stator présente une alternance de dents larges et de dents étroites, la largeur angulaire des dents larges étant au moins deux fois supérieure à la largeur angulaire des dents étroites, préférentiellement trois fois supérieure à la largeur angulaire des dents étroites.

Selon un mode de réalisation particulier, la largeur angulaire des dents est inférieure à 15°/K, typiquement 13°/K.

Selon une variante, ledit noyau présente 5.K rainures périphériques longitudinales dans lesquelles sont logés lesdits aimants permanents.

De préférence, lesdites rainures présentent une largeur supérieure à la largeur de l'aimant permanent.

Selon un premier mode de mise en œuvre, l'aimant permanent est collé sur le fond de la rainure.

Selon un deuxième mode de mise en œuvre, les aimants permanents sont encastrés, collés ou maintenu par un moyen mécanique quelconque dans le fond de la rainure.

Avantageusement, les aimants présentent une surface extérieure cylindrique.

Selon un mode de réalisation particulier, la distance radiale entre la surface intérieure des dents statoriques et la surface extérieure de l'aimants permanents est supérieure à la distance radiale entre la surface intérieure des dents statoriques et la surface extérieure des pôles saillants non aimantés.

Selon une variante, la largeur angulaire des aimants permanents est supérieure à la largeur des pôles saillants non aimantés.

Dans un mode de réalisation particulier permettant l'augmentation du flux magnétique produit par les aimants, chaque paire de pôles au rotor est constituée par l'alternance d'un pôle ferromagnétique saillant et de deux aimants de forme parallélépipédique formant un V dont la pointe est dirigée vers le centre du moteur et ayant une direction d'aimantation, chacun, unidirectionnelle et dirigée vers l'intérieur du V.

### Description détaillée d'un exemple de réalisation

La présente invention sera mieux comprise à la description d'exemples de réalisation non limitatifs qui suivent, se référant aux dessins annexés où :
- la figure 1a et 1b représentent des vues en coupe transversale respectivement du stator et du rotor d'un moteur selon une première variante de l'invention,
- la figure 2 représente un schéma de l'alimentation électrique typique des bobines,
- la figure 3 représente une vue en coupe transversale d'un moteur selon une deuxième variante de l'invention,
- la figure 4 représente la courbe du couple résiduel (sans courant) avec un stator selon l'état de l'art et un stator selon l'invention,
- la figure 5 représente la courbe du couple (avec courant) avec un stator selon l'état de l'art et un stator selon l'invention,
- la figure 6 représente les courbes du couple du à la réluctance variable en fonction de la position angulaire, avec un stator selon l'état de l'art et un stator selon l'invention,
- la figure 7 représente une variante de réalisation du rotor qui présente des aimants en forme de D,
- la figure 8 représente une variante de réalisation du rotor qui présente des aimants et des pôles ferromagnétiques de formes particulières,
- la figure 9 représente une variante de réalisation où le rotor est à l'extérieur du stator,
- la figure 10 représente une variante de réalisation utilisant plusieurs aimants configurés en forme de V pour réaliser un pôle aimanté.

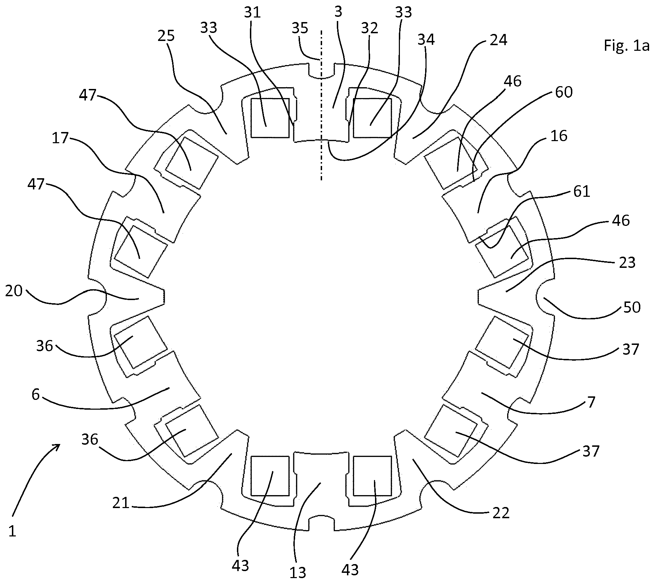

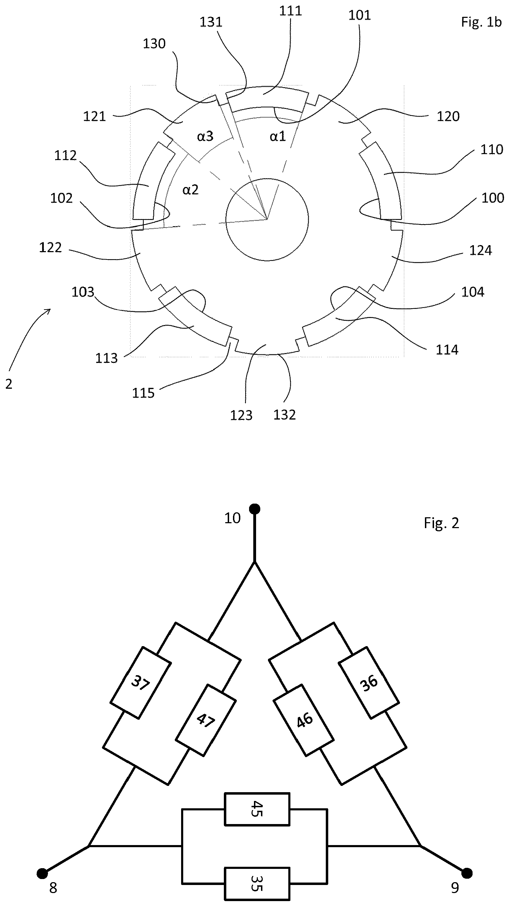

Les figures 1a et 1b représentent des vues en coupe transversale d'un moteur selon l'invention, respectivement une vue isolée du stator et une vue isolée du rotor.

Le moteur comprend de manière connue un stator (1) de forme cylindrique, entourant un rotor (2).

Le stator (1) est formé par un empilement de tôles découpées pour présenter une configuration illustrée par la vue en coupe de la figure 1a.

Chaque tôle du stator (1) présente une alternance de 6 dents larges (3, 6, 7, 13, 16, 17) et de 6 dents étroites (20, 21, 22, 23, 24, 25).

Les dents larges (3, 6, 7, 13, 16, 17) sont, dans l'exemple décrit des dents droites, délimitées par deux bords latéraux (31, 32) parallèles et symétriques par rapport à un axe radial (35).

Le bord avant (34) de chaque dent est incurvé avec un rayon de courbure correspondant au rayon de l'enveloppe cylindrique virtuelle passant par la surface intérieure, côté rotor, des dents.

La largeur angulaire des dents larges (3, 6, 7, 13, 16, 17) est de 20 degrés ± 2 degrés, et de préférence 20 degrés.

Chaque dent large (3, 6, 7, 13, 16, 17) est entourée par une bobine électrique (33, 36, 37, 43, 46, 47). Une bobine comprend typiquement, à titre d'exemple non limitatif, 36 tours de fil de cuivre d'une section de 0,5 mm, pour un moteur supportant un courant pic de 30 ampères en continu. La section d'une bobine est sensiblement carrée.

Les dents larges (3, 6, 7, 13, 16, 17) présentent une taille de guêpe, avec une partie médiane (60) de section légèrement inférieure à l'embase (61), afin d'assurer un calage du noyau de la bobine, qui peut être enfilée de force. La différence de section entre l'embase (61) et la partie médiane (60) est de l'ordre de 8 à 12%. Il est aussi possible de réaliser une partie médiane (60) de section légèrement supérieure à l'embase (61) pour caler le noyau de bobine, l'important étant de créer une discontinuité mécanique favorisant le maintien.

Deux bobines (33, 43) opposées forment une phase électrique. Les bobines d'une même phase sont reliées en parallèle, et les différentes phases sont reliées en connexion triangle (ou delta), toutes les phases étant alimentées en même temps, comme représenté en figure 2.

Les bobines opposées (33 et 43, 36 et 46, 37 et 47) sont reliées électriquement en parallèle, formant des paires, et chacune des paires correspondant à une phase. Chacune des paires est reliée à l'une et à l'autre paire, pour former un circuit triangle. Chaque point de connexion (8, 9, 10) est alimenté par un pont de transistor alimentant successivement chacune des paires de bobines, directement pour une des paires, et en série pour les deux autres paires.

Bien que la connexion électrique triangle soit illustrée ici, il est possible d'envisager tout autre mode de connexion classique de moteur, particulièrement triphasé, (étoile, triangle, les bobinages des mêmes phases étant en série ou parallèle).

Les bobinages sont enfilés sur les dents larges (3, 6, 7, 13, 16, 17) lors de la construction du moteur, par un glissement selon une direction radiale.

Les dents étroites (20 à 25) sont intercalées entre les dents larges. L'extrémité des dents étroites présente une largeur angulaire de 5 degrés ± 2 degrés, et de préférence 5 degrés.

Bien entendu, dans le cas d'un moteur de 24 pôles statoriques (non illustré), les largeurs angulaires des dents larges et des dents étroites sont divisées par deux.

La section transversale des dents étroites (20 à 25) présente une forme trapézoïdale avec des bords latéraux parallèles aux bords latéraux des dents larges adjacentes.

Des cannelures (50) sont prévues au niveau de l'embase de certaines dents étroites et/ou larges pour permettre le passage de goupilles de positionnement dans le stator.

Le rotor (2) est également formé par un empilement de tôles ferromagnétiques de forme globalement discales et présente une alternance de pôles aimantés et de pôles saillants.

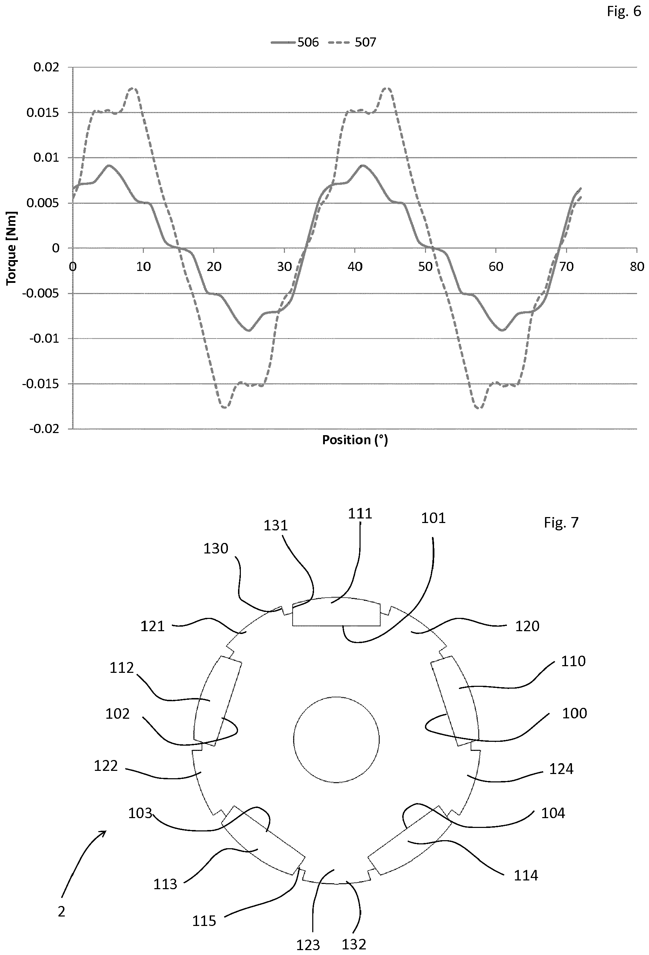

Elles présentent cinq rainures périphériques (100, 101, 102, 103, 104) recevant des aimants permanents (110, 111, 112, 113, 114) en forme de tuile ou avec une section en forme de D, comme illustré en figure 7, ainsi qu'un noyau (150) ferromagnétique.

Dans l'exemple décrit en figure 1b, les aimants (110 à 114) sont enchâssés dans le rotor (2), avec une pénétration d'environ 50% de l'épaisseur de l'aimant dans le rotor (2).

Ces aimants (110 à 114) sont solidarisés avec le rotor (2) par collage ou tout autre moyen de fixation classique. Il peut être envisagé d'injecter en une opération des aimants à liant plastique directement sur le paquet de tôles au rotor et de réaliser une aimantation du rotor ainsi constitué.

La largeur angulaire des aimants (110 à 114) est inférieure à la largeur angulaire des rainures périphériques (100 à 104).

A titre d'exemple, la largeur angulaire al des aimants (110 à 114) est de 36 degrés ± 2 degrés, la largeur angulaire α2 des rainures périphériques (100 à 104) est de 45 degrés ± 2 degrés. Le bord latéral (131) de l'aimant définit, avec le bord latéral de la rainure (130), un séparateur magnétique (115) évitant la fermeture du flux de l'aimant directement sur lui-même à travers le rotor (2), sans passer par le stator (1).

Entre deux aimants permanents, le rotor (2) présente des pôles ferromagnétiques saillants (120, 121, 122, 123, 124).

Ces pôles ferromagnétiques saillants (120 à 124) présentent une largeur angulaire α3 de 27.3 degrés ± 2 degrés, c'est à dire inférieure à la largeur angulaire des aimants permanents (110 à 114).

Le bord extérieur (132) des pôles ferromagnétiques saillants (120 à 124) est incurvé.

La distance d entre la surface incurvée (132) des pôles ferromagnétiques saillants (120 à 124) et la surface des dents statoriques est inférieure à la distance D entre la surface des aimants permanents et la surface des dents statoriques, d'un facteur de 2, typiquement 0,2 mm et 0,38 mm respectivement.

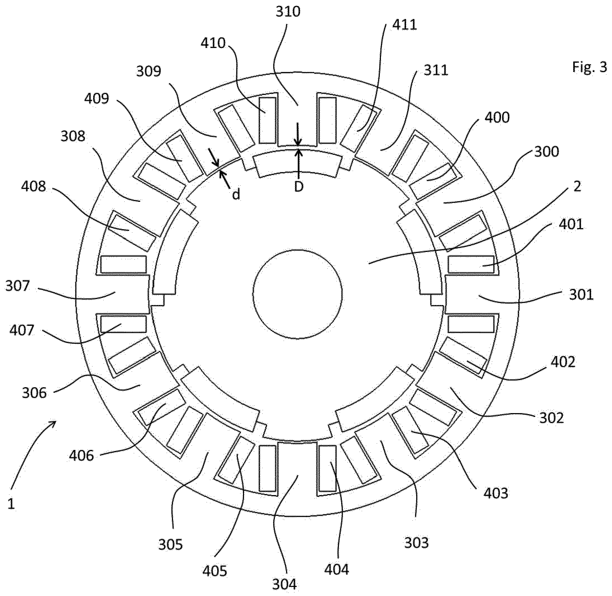

La figure 3 représente une variante de réalisation d'un moteur selon l'invention.

Le stator (1) comporte 12 dents (300 à 311) s'étendant selon des directions radiales, toutes identiques. Elles présentent une section rectangulaire, avec une face intérieure, côté rotor, incurvée. La largeur angulaire des dents (300 à 311), prise à leur extrémité intérieure, est de 13° ± 2 degrés, et de préférence 13 degrés.

Chacune des dents (300 à 311) est entourée par une bobine (400 à 411) comportant une vingtaine de tours de fil de cuivre.

Le rotor (2) est identique à celui illustré en figure 1b.

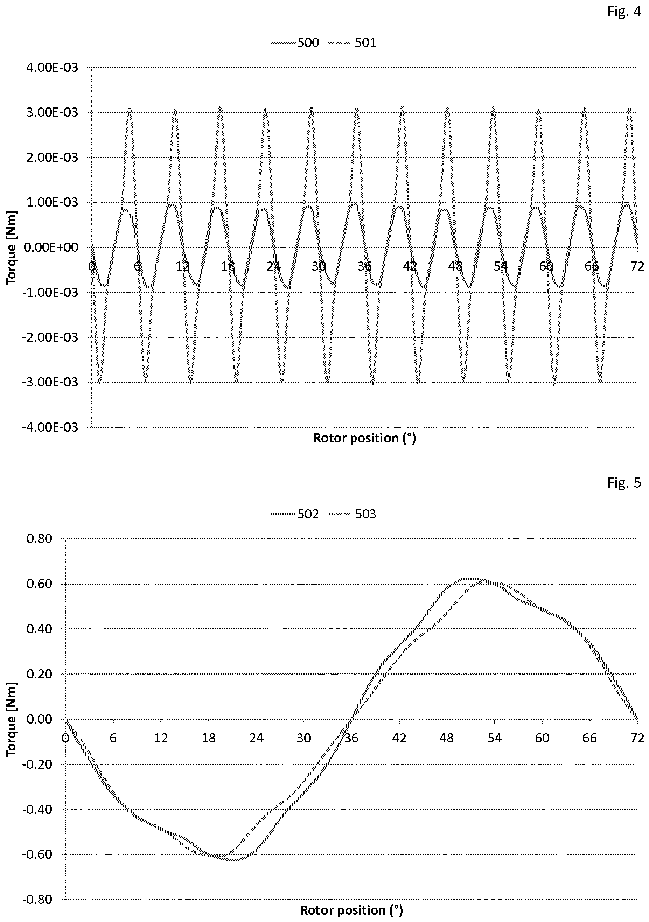

La figure 4 représente les courbes du couple résiduel (sans courant) avec un rotor présentant une alternance d'aimants et de pôles saillants, dans les cas où il y a cinq paires de pôles au rotor et 12 pôles au stator, en comparaison avec un stator de l'état de l'art, à pôles évasés.

La courbe (501) correspondant à un moteur proche de celui de l'invention, mais différent par le fait qu'il comporte un stator à pôles évasés, fait apparaître des variantes importantes du couple sans courant, en fonction de la position angulaire du rotor. Cette comparaison d'un moteur selon l'invention à un moteur de l'art antérieur est intéressante car le choix des pôles évasés est largement incité par l'état de la technique et parce que le résultat d'obtention d'un couple sans courant d'amplitude moins élevé avec un stator à pôles droits n'était ni incité, ni attendu.

Pour un moteur conforme à l'invention, avec un stator à pôles droits, on observe que la courbe de couple sans courant (500) est sensiblement minimisée.

La figure 5 représente les courbes du couple résiduel (avec courant et un nombre d'ampère-tour identique) avec un rotor présentant une alternance d'aimants et de pôles saillants, dans les cas où il y a cinq paires de pôles au rotor et 12 pôles au stator, toujours en comparaison avec un stator de l'état de l'art, à pôles évasés.

On observe que la solution proposée par l'invention conduit à une courbe (502) proche de la courbe (503) obtenue avec un stator à pôles évasés. Là encore, de manière surprenante, il n'est pas observé de dégradation du couple en forme et amplitude en choisissant des pôles droits. Ainsi, les pôles droits vont permettre de loger une plus grande quantité de cuivre bobiné et ainsi permettre la génération d'un couple plus élevé à puissance électrique constante.

L'inductance de phase peut aussi être diminuée par l'emploi de pôles droits.

La figure 6 représente les courbes du couple dû à la réluctance variable en fonction de la position angulaire, avec un moteur à stator à pôles évasés (courbe 507) et un moteur selon l'invention (courbe 506), les deux ayant un rotor identique présentant une alternance d'aimants et de pôles saillants.

On observe que les choix techniques propres au moteur selon l'invention permettent de réduire de manière significative le couple dû à la réluctance variable, sur toute la plage de positions angulaires du rotor, par rapport à des moteurs de l'art antérieur. Là encore, le choix du stator à pôles droits permet, de manière surprenante, d'améliorer les performances des moteurs de l'état de la technique. L'alternance de pôles étroits et larges permettent globalement d'améliorer ces observations et de bénéficier d'une fluidité de mouvement accrue.

La figure 7 présente un rotor selon l'invention portant des aimants tuiles s'étendant axialement, avec une section en forme de D. Dans ce mode de réalisation, la base des aimants, c'est-à-dire la surface intérieure, est plane et perpendiculaire au rayon.

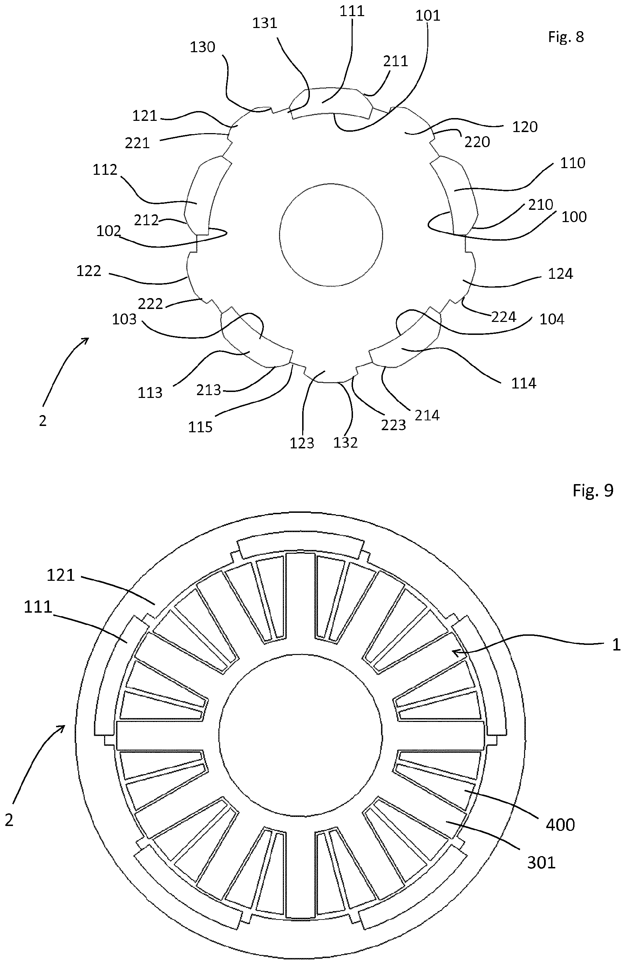

La figure 8 présente un rotor selon l'invention dans un mode de réalisation particulier où le rotor porte des aimants tuiles dont les bords extérieurs ont des formes (210, 211, 212, 213, 214) permettant d'augmenter la distance entre ces bords et la face intérieure des dents du stator. Le rotor porte aussi des pôles ferromagnétiques dont les bords extérieurs ont des formes (220, 221, 222, 223, 224) permettant d'augmenter la distance entre ces bords et la face intérieure des dents du stator. Les formes données (210, 211, 212, 213, 214, 220, 221, 222, 223, 224) sont typiquement des chanfreins ou des congés mais peuvent être de forme différentes. Ces formes sont spécifiquement données afin d'une part de réduire la masse d'aimant utilisé, permettant d'économiser de la matière et diminuer l'inertie du rotor, et d'autre part d'ajuster la forme du couple avec courant. En effet, la forme donnée aux bords des aimants et des pôles saillants permet notamment de rendre plus sinusoïdal le couple avec courant.

La présente invention n'est pas restreinte aux modes de réalisation où le rotor du moteur est à l'intérieur du stator. La figure 9 présente une version de moteur où le rotor (2) est extérieur au stator (1). Le moteur présente alors les mêmes caractéristiques générales que celles décrites sur les figures précédentes et présente particulièrement un stator (1) à 12 dents à section constante (301) s'étendant depuis le centre du moteur. Ces dents (301) portent ici chacune une bobine (400). Le rotor (2) extérieur au stator (1) présente une alternance d'aimants permanents (111) dont la direction d'aimantation peut être radiale ou unidirectionnelle.

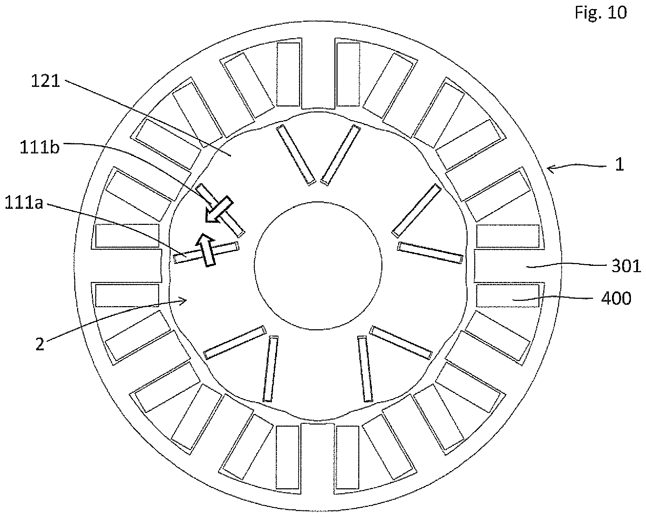

Afin d'augmenter le flux magnétique dans la structure et ainsi d'augmenter les performances générales, il est possible d'envisager de positionner deux aimants pour former un V et reproduire ainsi une paire de pôles magnétiques en alternant ce V aimanté et une saillance ferromagnétique. La figure 10 illustre un exemple de réalisation d'une telle topologie à rotor intérieur. On retrouve un stator (2) présentant des dents (301) à section constante convergeant vers le centre du moteur et portant ici chacune une bobine électrique d'alimentation (400). Le rotor (2) présente une alternance de saillances ferromagnétiques (121) et d'aimants permanents (111a) et (111b). Ces aimants (111a) et (111b) sont sous la forme de blocs parallélépipédiques installés au rotor pour former un V dont la pointe est dirigée vers le centre du moteur, la direction d'aimantation, symbolisée par les deux flèches épaisses en figure 10, étant unique pour chaque aimant et dirigée vers l'intérieur du V afin d'augmenter le flux magnétique global. Une concentration de flux est ainsi permise par cette topologie.

## Revendications

1. Moteur électrique polyphasé comprenant un stator (1) portant au moins trois bobines (33, 43, 36, 46, 37, 47) et constitué de 12K dents s'étendant radialement et un rotor (2) présentant 5K paires de pôles magnétiques, K étant égal à 1 ou 2, le rotor (2) étant constitué par un noyau (150) en un matériau ferromagnétique et présentant une alternance de 5K pôles aimantés (110,111,112,113,114,210,211,212,213,214), et de 5K pôles saillants non aimantés (120,121,122,123,124,220,221,222,223,224) **caractérisé en ce que** le stator (1) présente des dents (3, 6, 7, 13, 16, 17, 20, 21, 22, 23, 24, 25) de section rectangulaire ou trapézoïdale convergeant vers le centre du moteur, dans un plan transversal par rapport à l'axe du moteur.

2. Moteur électrique selon la revendication 1 **caractérisée en ce que** le stator (1) est intérieur au rotor (2).

3. Moteur électrique selon la revendication 1 **caractérisée en ce que** le stator (1) est extérieur au rotor (2).

4. Moteur électrique selon les revendications 1 à 3 **caractérisé en ce que** le stator (1) comprend une alternance de dents larges (3, 6, 7, 13, 16, 17) et de dents étroites (20, 21, 22, 23, 24, 25).

5. Moteur électrique selon la revendication 4 **caractérisé en ce que** la largeur angulaire des dents larges (3, 6, 7, 13, 16, 17) est au moins deux fois supérieure à la largeur angulaire des dents étroites (20, 21, 22, 23, 24, 25), préférentiellement trois fois supérieure à la largeur angulaire des dents étroites.

6. Moteur électrique selon la revendication 1 **caractérisé en ce que** la largeur angulaire des dents est inférieure à 15°/K, typiquement 13°/K.

7. Moteur électrique selon l'une des revendications 1 à 6 **caractérisé en ce que** les pôles aimantés sont des secteurs d'aimants permanents (110,111,112,113,114) et **en ce que** ledit noyau (150) présente 5K rainures périphériques longitudinales (100,101,102,103,104) dans lesquelles sont logés lesdits aimants permanents.

8. Moteur électrique selon la revendication 7 **caractérisé en ce que** lesdites rainures présentent une largeur supérieure à la largeur de l'aimant permanent.

9. Moteur électrique selon la revendication 7 ou 8 **caractérisé en ce que** l'aimant permanent est collé sur le fond de la rainure.

10. Moteur électrique selon la revendication 7 ou 8 **caractérisé en ce que** les aimants permanents sont encastrés dans le fond de la rainure.

11. Moteur électrique selon les revendications 7 à 10 **caractérisé en ce que** les aimants présentent une surface extérieure cylindrique.

12. Moteur électrique selon l'une quelconque des revendications précédentes **caractérisé en ce que** la distance radiale entre la surface intérieure des dents statoriques et la surface extérieure des pôles aimantés est supérieure à la distance radiale entre la surface intérieure des dents statoriques et la surface extérieure des pôles saillants non aimantés.

13. Moteur électrique selon l'une quelconque des revendications précédentes **caractérisé en ce que** la largeur angulaire des pôles aimantés est supérieure à la largeur des pôles saillants non aimantés.

14. Moteur électrique selon la revendication 1 **caractérisé en ce que** chaque paire de pôles au rotor (2) est constituée par l'alternance d'un pôle ferromagnétique saillant (112) et d'un pôle aimanté sous la forme de deux aimants de forme parallélépipédique formant un V (111a,111b) dont la pointe est dirigée vers le centre du moteur et ayant une direction d'aimantation, chacun, unidirectionnelle et dirigée vers l'intérieur du V.

## Patentansprüche

1. Mehrphasen-Elektromotor mit einem Stator (1), der mindestens drei Spulen (33, 43, 36, 46, 37, 47) trägt und aus 12K-Zähnen besteht, die sich radial erstrecken, und einem Rotor (2) mit magnetischen 5K-Polpaaren, wobei K gleich 1 oder 2 ist, wobei der Rotor (2) aus einem Kern (150) aus ferromagnetischem Material besteht und abwechselnd 5K-Magnetpole (110,111,112,113,114,210,211,212,213,214) und hervorstehende nicht magnetische 5K-Pole (120,121,122,123,124,220,221,222,223,224) aufweist, **dadurch gekennzeichnet, dass** der Stator (1) Zähne (3, 6, 7, 13, 16, 17, 20, 21, 22, 23, 24, 25) mit rechteckigem oder trapezförmigem Querschnitt aufweist, die in Richtung der Motormitte in einer Ebene quer zur Motorachse zusammenlaufen.

2. Elektromotor nach Anspruch 1, **dadurch gekennzeichnet, dass** sich der Stator (1) innerhalb des Rotors (2) befindet.

3. Elektromotor nach Anspruch 1, **dadurch gekennzeichnet, dass** sich der Stator (1) außerhalb des Rotors (2) befindet.

4. Elektromotor nach den Ansprüchen 1 bis 3, **dadurch gekennzeichnet, dass** der Stator (1) abwechselnd breite Zähne (3, 6, 7, 13, 16, 17) und schmale Zähne (20, 21, 22, 23, 24, 25) umfasst.

5. Elektromotor nach Anspruch 4, **dadurch gekennzeichnet, dass** die Winkelbreite der breiten Zähne (3, 6, 7, 13, 16, 17) mindestens doppelt so groß ist wie die Winkelbreite der schmalen Zähne (20, 21, 22, 23, 24, 25), vorzugsweise dreimal größer als die Winkelbreite der schmalen Zähne.

6. Elektromotor nach Anspruch 1, **dadurch gekennzeichnet, dass** die Winkelbreite der Zähne weniger als 15 °/K, typischerweise 13 °/K, beträgt.

7. Elektromotor nach einem der Ansprüche 1 bis 6, **dadurch gekennzeichnet, dass** die Magnetpole Sektoren von Permanentmagneten (110, 111, 112, 113, 114) sind und dass der Kern (150) 5K-Umfangsrillen in Längsrichtung (100, 101, 102, 103, 104) aufweist, in denen die Permanentmagnete untergebracht sind.

8. Elektromotor nach Anspruch 7, **dadurch gekennzeichnet, dass** die Rillen eine Breite aufweisen, die größer als die Breite des Permanentmagneten ist.

9. Elektromotor nach Anspruch 7 oder 8, **dadurch gekennzeichnet, dass** der Permanentmagnet auf den Boden der Rille geklebt ist.

10. Elektromotor nach Anspruch 7 oder 8, **dadurch gekennzeichnet, dass** die Permanentmagnete im Boden der Rille eingebettet sind.

11. Elektromotor nach den Ansprüchen 7 bis 10, **dadurch gekennzeichnet, dass** die Magnete eine zylindrische Außenfläche aufweisen.

12. Elektromotor nach einem der vorhergehenden Ansprüche, **dadurch gekennzeichnet, dass** der radiale Abstand zwischen der Innenfläche der Statorzähne und der Außenfläche der Magnetpole größer ist als der radiale Abstand zwischen der Innenfläche der Statorzähne und der Außenfläche der nicht magnetischen hervorstehenden Pole.

13. Elektromotor nach einem der vorhergehenden Ansprüche, **dadurch gekennzeichnet, dass** die Winkelbreite der Magnetpole größer ist als die Breite der nicht magnetischen hervorstehenden Pole.

14. Elektromotor nach Anspruch 1, **dadurch gekennzeichnet, dass** jedes Polpaar am Rotor (2) aus einem abwechselnd hervorstehenden ferromagnetischen Pol (112) und einem magnetischen Pol in Form von zwei Magneten in Quaderform, die ein V (111a, 111b) bilden, besteht, dessen Spitze auf die Mitte des Motors gerichtet ist, und eine Magnetisierungsrichtung aufweisen, die jeweils unidirektional und auf das Innere des V gerichtet ist.

## Claims

1. Polyphase electric motor comprising a stator (1) that has at least three coils (33, 43, 36, 46, 37, 47) and consists of 12K radially extending teeth, and comprising a rotor (2) having 5K pairs of magnetic poles, K being equal to 1 or 2, the rotor (2) being composed of a core (150) made of a ferromagnetic material, and having an alternation of 5K magnetized poles (110, 111, 112, 113, 114, 210, 211, 212, 213, 214), and 5K non-magnetized salient poles (120, 121, 122, 123, 124, 220, 221, 222, 223, 224), **characterized in that** the stator (1) has teeth (3, 6, 7, 13, 16, 17, 20, 21, 22, 23, 24, 25) having a rectangular or trapezoidal cross section that converge toward the center of the motor, in a plane that is transverse relative to the axis of the motor.

2. Electric motor according to claim 1, **characterized in that** the stator (1) is inside the rotor (2).

3. Electric motor according to claim 1, **characterized in that** the stator (1) is outside the rotor (2).

4. Electric motor according to claims 1 to 3, **characterized in that** the stator (1) comprises an alternation of wide teeth (3, 6, 7, 13, 16, 17) and narrow teeth (20, 21, 22, 23, 24, 25).

5. Electric motor according to claim 4, **characterized in that** the angular width of the wide teeth (3, 6, 7, 13, 16, 17) is at least twice as great as the angular width of the narrow teeth (20, 21, 22, 23, 24, 25), preferably three times greater than the angular width of the narrow teeth.

6. Electric motor according to claim 1, **characterized in that** the angular width of the teeth is less than 15°/K, typically 13°/K.

7. Electric motor according to any of claims 1 to 6, **characterized in that** the magnetized poles are sectors of permanent magnets (110, 111, 112, 113, 114), and **in that** said core (150) has 5K longitudinal peripheral grooves (100, 101, 102, 103, 104) in which said permanent magnets are housed.

8. Electric motor according to claim 7, **characterized in that** said grooves have a width greater than the width of the permanent magnet.

9. Electric motor according to either claim 7 or claim 8, **characterized in that** the permanent magnet is adhesively bonded to the bottom of the groove.

10. Electric motor according to either claim 7 or claim 8, **characterized in that** the permanent magnets are embedded in the bottom of the groove.

11. Electric motor according to claims 7 to 10, **characterized in that** the magnets have a cylindrical outer surface.

12. Electric motor according to any of the preceding claims, **characterized in that** the radial distance between the inner surface of the stator teeth and the outer surface of the magnetized poles is greater than the radial distance between the inner surface of the stator teeth and the outer surface of the non-magnetized salient poles.

13. Electric motor according to any of the preceding claims, **characterized in that** the angular width of the magnetized poles is greater than the width of the non-magnetized salient poles.

14. Electric motor according to claim 1, **characterized in that** each pair of poles on the rotor (2) is composed of the alternation of a salient ferromagnetic pole (112) and a magnetized pole in the form of two parallelepiped magnets forming a V (111a, 111b), the tip of which is directed toward the center of the motor, and each magnet having a direction of magnetization that is unidirectional and directed toward the inside of the V.
